# EUROPÄISCHE PATENTANMELDUNG

(11) **EP 2 206 971 A2**
(43) Veröffentlichungstag der Anmeldung: **14.07.2010**
(21) Anmeldenummer: 09450226.7
(22) Anmeldetag: 01.12.2009
(51) Int. Cl.: F24D 11/00, F24H 9/12

(54) **Wärmespeicher**

(30) Priorität: 29.12.2008 AT 20222008
(71) Anmelder: Teufel, Arnold, 6372 Oberndorf (AT)
(72) Erfinder: Teufel, Arnold, 6372 Oberndorf (AT)
(74) Vertreter: Hübscher, Helmut

(57) **Zusammenfassung**

Es wird ein Wärmespeicher mit einem Behälter (1) zur temperaturgeschichteten Aufnahme eines Wärmeträgers und mit wenigstens einem Ladekreis beschrieben, der einen außerhalb des Behälters (1) vorgesehenen Wärmetauscher (5) zum Erwärmen des Wärmeträgers und eine sich zumindest über einen Teil der Behälterhöhe erstreckende, mit dem Behälter (1) in unterschiedlichen Höhen strömungsverbundene Steigleitung (9, 18) für den erwärmten Wärmeträger umfasst. Um vorteilhafte Ladebedingungen zu schaffen, wird vorgeschlagen, dass die auf der Innenseite des Behälters (1) entlang des Behältermantels (10) verlaufende Steigleitung (9, 18) auf einander gegenüberliegenden, quer zum Mantelumfang verlaufenden Wandabschnitten über ihre Länge verteilte Durchtrittsöffnungen (11, 21) für den Wärmeträger aufweist.

## Beschreibung

Die Erfindung bezieht sich auf einen Wärmespeicher mit einem Behälter zur temperaturgeschichteten Aufnahme eines Wärmeträgers und mit wenigstens einem Ladekreis, der einen außerhalb des Behälters vorgesehenen Wärmetauscher zum Erwärmen des Wärmeträgers und eine sich zumindest über einen Teil der Behälterhöhe erstreckende, mit dem Behälter in unterschiedlichen Höhen strömungsverbundene Steigleitung für den erwärmten Wärmeträger umfasst.

Um ohne Steuerungsaufwand eine der Temperaturschichtung entsprechende Ladung eines Wärmespeichers über einen Ladekreis zu gewährleisten, der einen außerhalb des Wärmespeicherbehälters angeordneten Wärmetauscher zum Erwärmen des Wärmeträgers über ein Heizmedium und eine sich zumindest über einen Teil der Behälterhöhe erstreckende, mit dem Behälter in unterschiedlichen Höhen strömungsverbundene Steigleitung für den erwärmten Wärmeträger umfasst, ist es bekannt (EP 924 471 A2), die außerhalb des Behälters verlaufende, über Verbindungsleitungen an den Behälter angeschlossene Steigleitung mit dem Wärmetauscher zu einem selbstumlaufenden Ladekreis zusammenzuschließen. Im Gegensatz zu Wärmetauschern mit einem Zwangsumlauf wird die Ladekreisströmung eines selbstumlaufenden Ladekreises von der jeweiligen Temperatur des im Wärmetauscher erwärmten Wärmeträgers und der Schichttemperatur im Behälter bestimmt. Der selbstumlaufende Ladekreis erfordert zwar eine Nacheinanderschaltung des Wärmetauschers und der Steigleitung der Höhe nach, doch kann das Heizmedium für den Wärmetauscher in einem Zwangsumlauf geführt werden, sodass das jeweilige Wärmeangebot durch das Heizmedium trotz der unterschiedlichen Temperaturniveaus gut ausgenützt werden kann. Es muss allerdings eine an den Wärmetauscher angeschlossene Steigleitung außerhalb des Behälters in Kauf genommen werden.

Zum Aufladen eines Warmwasserspeichers ist es außerdem bekannt (EP 0 518 369 A1), im Speicherbehälter eine sich über die Behälterhöhe erstreckende Steigleitung vorzusehen, in der eine Ladeleitung eines Ladekreises mündet. Dieser Ladekreis entnimmt dem Speicherbehälter das zu erwärmende Wasser im Bodenbereich, um es über einen Wärmetauscher aufzuwärmen und der Steigleitung in einem mittleren Höhenbereich zuzuführen, die an ihrem oberen Ende und im Bereich unterhalb der Mündung der Ladeleitung Durchtrittsöffnungen aufweist, sodass unter bestimmten Strömungsverhältnissen das über die Ladeleitung zuströmende Wasser in Abhängigkeit von seiner Ladetemperatur entweder in der Steigleitung nach oben aufsteigt oder nach unten absinkt, um durch die Durchtrittsöffnungen der Steigleitung in die der Ladetemperatur angepasste Wasserschicht auszutreten. Wegen des Zwangsumlaufs des durch den Ladekreis geförderten Wassers können jedoch die für die angestrebte Wirkung erforderlichen Strömungsverhältnisse kaum eingehalten werden.

Der Erfindung liegt somit die Aufgabe zugrunde, einen Wärmespeicher der eingangs geschilderten Art so auszugestalten, dass auf eine äußere Steigleitung verzichtet werden kann und die Temperaturschichtung des vom Behälter aufgenommenen Wärmeträgers beim Laden des Wärmespeichers weitgehend erhalten bleibt.

Die Erfindung löst die gestellte Aufgabe dadurch, dass die auf der Innenseite des Behälters entlang des Behältermantels verlaufende Steigleitung auf einander gegenüberliegenden, quer zum Mantelumfang verlaufenden Wandabschnitten über ihre Länge verteilte Durchtrittsöffnungen für den Wärmeträger aufweist.

Die auf der Innenseite des Behälters entlang des Behältermantels verlaufende Steigleitung bringt zunächst den Vorteil mit sich, dass keine außerhalb des Behälters vorzusehenden Konstruktionsteile erforderlich werden und die Wärmeisolierung des Behälters auch für die Steigleitung genützt werden kann. Die Verbindung der Steigleitung mit dem Behältermantel bewirkt außerdem im Zusammenhang mit den in Umfangsrichtung ausgerichteten Durchtrittsöffnungen für den Wärmeträger, dass der innerhalb des Steigrohrs aufsteigende Wärmeträger im Bereich der seiner Temperatur entsprechenden Wärmeträgerschicht in Umfangsrichtung des Behälters in diesen austritt, was Strömungsverhältnisse nach sich zieht, die die Temperaturschichtung innerhalb des Behälters nur wenig stören, sodass aufgrund der Temperaturschichtung sich im oberen Behälterbereich ergebende höhere Wärmeträgertemperaturen auch bei einem weitgehend entladenen Wärmespeicher genützt werden können.

Obwohl hinsichtlich der Ausbildung der Steigleitung keine Einschränkungen gegeben sind, wenn für einen entsprechenden Strömungsquerschnitt gesorgt wird, ergeben sich besonders einfache Konstruktionsverhältnisse, wenn die Steigleitung aus einem im Querschnitt U-förmigen Profil besteht, das mit seiner offenen Seite an den Behältermantel anschließt und in den an den Behältermantel anschließenden Schenkeln die Durchtrittsöffnungen aufweist, weil in diesem Fall der die beiden Schenkel des Profils verbindende Behältermantel Teil des durch die Steigleitung bestimmten Strömungskanals ist. Der U-förmige Querschnitt des Profils ergibt außerdem aufgrund der vom Behältermantel radial abstehenden Schenkel eine vorteilhafte Ausrichtung der in diesen Schenkeln vorgesehenen Durchtrittsöffnungen, sodass der Wärmeträger durch diese Öffnungen in Umfangsrichtung in das Behälterinnere ausströmt.

Wird für einen Wärmespeicher neben einem selbstumlaufenden Ladekreis ein zusätzlicher Ladekreis mit einem Zwangsumlauf vorgesehen, wie dies beispielsweise beim Einsatz von Wärmepumpen der Fall sein kann, so empfiehlt es sich, wenigstens zwei entlang des Behältermantels verlaufende Steigleitungen einerseits für den selbstumlaufenden Ladekreis und anderseits für zumindest einen Ladekreis mit Zwangsumlauf vorzusehen, damit diese Ladekreise einander nicht in störender Weise beeinflussen können. In diesem Zusammenhang ist ja zu berücksichtigen, dass für Ladekreise mit einem Zwangsumlauf andere Strömungsverhältnisse wie bei einem selbstumlaufenden Ladekreis vorlieben. Es ist daher auch möglich, dass an die Steigleitung für einen Ladekreis mit Zwangsumlauf der Vor- und Rücklauf eines Heizkreises angeschlossen wird, sodass unter Umständen der vom Ladekreis zugeförderte warme Wärmeträger über die Steigleitung dem Vorlauf des Heizkreises zur Verfügung gestellt werden kann.

Um einen Wärmeaustausch zwischen dem erwärmten Wärmeträger innerhalb der Steigleitung und dem Wärmeträger im Behälter zu unterbinden und damit die Störeinflüsse auf die Temperaturschichtung des Wärmeträgers innerhalb des Behälters zu verringern, kann die Steigleitung mit einer Wärmeisolierung versehen werden.

In der Zeichnung ist der Erfindungsgegenstand beispielsweise dargestellt. Es zeigen
Fig. 1 einen erfindungsgemäßen Wärmespeicher in einem schematischen Längsschnitt und

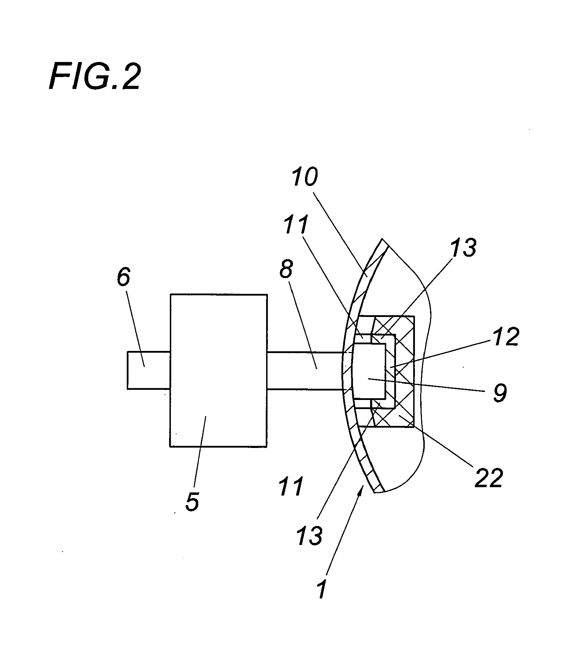

Fig. 2 einen Schnitt nach der Linie II-II der Fig. 1 in einem größeren Maßstab.

Der dargestellte Wärmespeicher weist einen Behälter 1 zur temperaturgeschichteten Aufnahme eines Wärmeträgers, vorzugsweise Wasser, auf. Mit Hilfe dieses Wärmeträgers wird Brauchwasser in einem Wärmetauscher 2 erwärmt, der aus einer schraubenförmig verlaufenden Rohrschlange gebildet wird. An den Behälter 1 ist außerdem wenigstens ein weiterer Verbraucherkreis angeschlossen. Dieser Verbraucherkreis kann ein Heizkreis sein, dessen Vorlaufanschluss mit 3 und dessen Rücklaufanschluss mit 4 bezeichnet sind. Zum Erwärmen des Wärmeträgers ist ein selbstumlaufender Ladekreis mit einem außerhalb des Behälters 1 angeordneten Wärmetauscher 5 vorgesehen, der beispielsweise als Plattenwärmetauscher ausgebildet und an den Vorlauf 6 und an den Rücklauf 7 eines Sonnenkollektors angeschlossen sein kann. Der im Bodenbereich an den Behälter 1 angeschlossenen Wärmetauscher 5 erwärmt den Wärmeträger, der über den Vorlauf 8 des Ladekreises wieder in den Behälter 1 geführt wird. Der Wärmeträger tritt jedoch nicht unmittelbar in den Behälter 1 ein, sondern in eine Steigleitung 9, die entlang des Behältermantels 10 verläuft und über ihre Höhe verteilte Durchtrittsöffnungen 11 aufweist. Die Steigleitung 9 wird gemäß dem Ausführungsbeispiel durch ein im Querschnitt U-förmiges Profil 12 gebildet, dessen Schenkel 13 im Wesentlichen in radialer Richtung an den Behältermantel 10 anschließen und mit den Durchtrittsöffnungen 11 versehen sind, sodass sich die Durchtrittsöffnungen 11 in quer zum Mantelumfang verlaufenden Wandabschnitten der Steigleitung 9 befinden, was eine in Umfangsrichtung verlaufende Austrittsströmung bedingt, die nur eine geringe Störung der Temperaturschichtung des Wärmeträgers im Behälter 1 während des Ladevorgangs mit sich bringt.

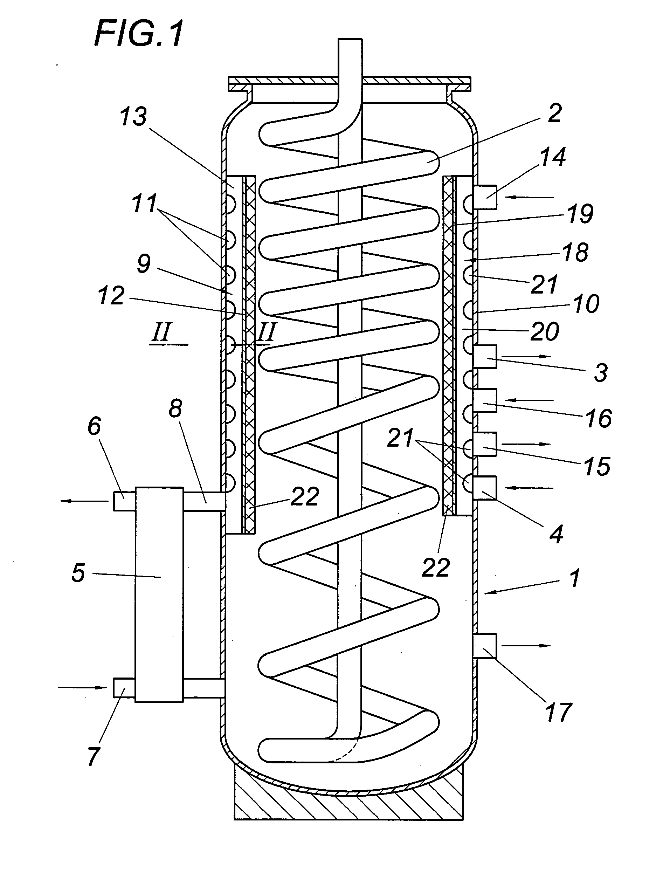

Der Wärmespeicher kann aber auch über einen Ladekreis mit Zwangsumlauf aufgeladen werden. In der Fig. 1 sind zu diesem Zweck Anschlüsse für eine Wärmepumpe angedeutet, die Ladekreise mit hoher und niedriger Temperatur bildet. Der Vorlauf und der Rücklauf für die hohe Ladetemperatur sind mit 14 und 15 bezeichnet. Der Vorlauf und der Rücklauf für die niedrigere Ladetemperatur der Wärmepumpe tragen die Bezugszeichen 16 und 17. Um auch für den Fall der Ladung des Wärmespeichers über die Wärmepumpe eine Temperaturschichtung des Wärmeträgers möglichst störungsfrei aufrechterhalten zu können, münden zumindest die Vorläufe 14 und 16 der Ladekreise für die höhere und niedrigere Wärmeträgertemperatur wiederum in einer Steigleitung 18, die ähnlich der Steigleitung 9 aufgebaut, jedoch an die unterschiedlichen Strömungsverhältnisse angepasst ist und daher einen größeren Strömungsquerschnitt aufweist. Diese Steigleitung 18 verläuft wiederum entlang des Behältermantels 10 und besteht aus einem im Querschnitt U-förmigen Profil 19, dessen Schenkel 20 an den Behältermantel anschließen und Durchtrittsöffnungen 21 für den Wärmeträger in den Schenkeln 20 besitzen, um den Austritt des Wärmeträgers in den Behälter 1 so zu gestalten, dass die vertikale Temperaturschichtung weitgehend beibehalten werden kann.

Wie der Fig. 1 entnommen werden kann, gehen auch die Anschlüsse 3 und 4 für den Heizkreis von der Steigleitung 18 aus, was den Vorteil mit sich bringt, dass unter bestimmten Verhältnissen die Ladekreise der Wärmepumpe unmittelbar für die Speisung des Heizkreises mit erwärmtem Wärmeträger genützt werden kann.

Wegen der Temperaturschichtung des Wärmeträgers im Behälter 1 könnte es aufgrund eines Wärmeübergangs insbesondere im unteren Steigleitungsbereich vom wärmeren Wärmeträger innerhalb der jeweiligen Steigleitung 9, 18 auf den schichtungsbedingt kälteren Wärmeträger im Behälter 1 zu einer Störung des Schichtaufbaus kommen. Um diesen den Schichtaufbau beeinträchtigenden Einfluss zu vermeiden, können die Steigleitungen 9, 18 mit einer Wärmeisolierung 22 versehen werden.

## Patentansprüche

1. Wärmespeicher mit einem Behälter (1) zur temperaturgeschichteten Aufnahme eines Wärmeträgers und mit wenigstens einem Ladekreis, der einen außerhalb des Behälters (1) vorgesehenen Wärmetauscher (5) zum Erwärmen des Wärmeträgers und eine sich zumindest über einen Teil der Behälterhöhe erstreckende, mit dem Behälter (1) in unterschiedlichen Höhen strömungsverbundene Steigleitung (9, 18) für den erwärmten Wärmeträger umfasst, **dadurch gekennzeichnet, dass** die auf der Innenseite des Behälters (1) entlang des Behältermantels (10) verlaufende Steigleitung (9, 18) auf einander gegenüberliegenden, quer zum Mantelumfang verlaufenden Wandabschnitten über ihre Länge verteilte Durchtrittsöffnungen (11, 21) für den Wärmeträger aufweist.

2. Wärmespeicher nach Anspruch 1, **dadurch gekennzeichnet, dass** die Steigleitung (9, 18) aus einem im Querschnitt U-förmigen Profil (12, 19) besteht, das mit seiner offenen Seite an den Behältermantel (10) anschließt und in den an den Behältermantel (10) anschließenden Schenkeln (13, 20) die Durchtrittsöffnungen (11, 21) aufweist.

3. Wärmespeicher nach Anspruch 1 oder 2, **dadurch gekennzeichnet, dass** wenigstens zwei entlang des Behältermantels (10) verlaufende Steigleitungen (9, 18) einerseits für einen selbstumlaufenden Ladekreis und anderseits für zumindest einen Ladekreis mit Zwangsumlauf vorgesehen sind.

4. Wärmespeicher nach einem der Ansprüche 1 bis 3, **dadurch gekennzeichnet, dass** an die Steigleitung (18) für einen Ladekreis mit Zwangsumlauf der Vor- und Rücklauf (3, 4) eines Heizkreises angeschlossen sind.

5. Wärmespeicher nach einem der Ansprüche 1 bis 4, **dadurch gekennzeichnet, dass** die Steigleitung (9, 18) mit einer Wärmeisolierung (22) versehen ist.
